(19) Europäisches Patentamt
European Patent Office
Office européen des brevets

(11) **EP 2 794 743 B1**

(12) **EUROPEAN PATENT SPECIFICATION**

(45) Date of publication and mention
of the grant of the patent:
**27.07.2016 Bulletin 2016/30**

(51) Int Cl.:
*C08K 3/16* (2006.01)     *C08L 23/22* (2006.01)
*C08L 101/12* (2006.01)    *C09D 201/00* (2006.01)
*C09D 123/00* (2006.01)    *B05B 1/00* (2006.01)
*C08K 5/01* (2006.01)

(21) Application number: **12821151.3**

(22) Date of filing: **21.12.2012**

(86) International application number:
**PCT/NL2012/050920**

(87) International publication number:
**WO 2013/095146 (27.06.2013 Gazette 2013/26)**

(54) **COMPOSITION FOR COATING A SUBSTRATE AND METHOD FOR COATING A SUBSTRATE**

ZUSAMMENSETZUNG ZUR BESCHICHTUNG EINES SUBSTRATS UND VERFAHREN ZUR BESCHICHTUNG EINES SUBSTRATS

COMPOSITION DE REVÊTEMENT D'UN SUBSTRAT ET PROCÉDÉ DE REVÊTEMENT D'UN SUBSTRAT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2011 EP 11195648**
**23.12.2011 US 201161579743 P**

(43) Date of publication of application:
**29.10.2014 Bulletin 2014/44**

(73) Proprietor: **Frans Nooren Afdichtingssystemen B.V.**
**9503 JB Stadskanaal (NL)**

(72) Inventors:
• **NOOREN, Franciscus Petrus Marie**
  **NL-9503 JB Stadskanaal (NL)**
• **DODDEMA, Jan Frederik**
  **NL-9503 JB Stadskanaal (NL)**
• **BROESDER, Hindrik Harm**
  **NL-9503 JB Stadskanaal (NL)**

(74) Representative: **Nederlandsch Octrooibureau**
**P.O. Box 29720**
**2502 LS The Hague (NL)**

(56) References cited:
**WO-A1-98/21765     WO-A2-2010/051212**
**US-A- 6 110 999     US-A1- 2007 185 310**

## Description

## Field of the invention

The present invention relates to a composition for coating a substrate and to a method for coating a substrate. The invention further relates to a container comprising such a composition and a propellant.

## Background of the invention

Protection of a substrate from external effects, such as for example those causing corrosion and wear, may be accomplished in a number of ways. A frequently applied method is the application of a protective layer, such as for example a coating or a layer of paint, to the surface of the substrate.

In some cases, special requirements are imposed on the protective layer by the specific use of the substrate. This may be the case when a substrate is extensively exposed to mechanical forces and/or fluctuating temperatures or other weather conditions, such as for example ship components, parts of constructions like oil platforms, (hoisting) cranes, bridges, and lamp posts. The effects that may be experienced by a substrate include for example expansion and shrinkage caused by temperature fluctuations, mechanical vibrations due to for example power or drive systems, generators, pumps and traffic, and mechanical stresses exerted on the construction by wave action, sea swell, traffic and the like.

Under these circumstances, the protective layer on these substrates may give rise to problems. Often, a coat of paint is applied to the substrate as a protective layer. Such a coat of paint often consists of at least two layers, namely a primer and a top coat. Nearly all such layers of paint have the property that they harden to form a rigid layer on the substrate to which they have been applied. A result of the rigid mechanical nature of a layer of paint is that such layers are not sufficiently flexible to cope with the variations in the substrate during use, such as, amongst others, the variations in dimension.

As an example, during construction or renovation of ships, numerous problems are encountered with the coating of the internal parts, such as ballast tanks and hold compartments. When a ship is being built these parts are made by welding steel components together, followed by the application of a number of coats of paint. Ships must be inspected and maintained at certain intervals after their launch, and certain requirements are to be met with regard to, amongst others, corrosion.

N. Warren: "Metal Corrosion in Boats", 3rd ed., Sheridan House Inc., 2006, incorporated by reference, discloses that in some cases corrosion already occurs after a few years on various parts of a ship, affecting for example the welds, corners and places that are difficult to access. In practice, it turns out that the hardened layers of paint show cracks or even become detached from their substrate, facilitating the corrosion of the underlying material, e.g. steel, under the influence of atmospheric oxygen. This corrosion process is accelerated by environmental factors such as the presence of salt and water.

Another disadvantage is that for the application of a primer various requirements are often imposed on the surface to which the primer is to be applied. In addition, harmful substances are often released during the application of a primer, so that a great deal of thought must be given to equipment for personal protection.

Primer compositions are known from prior art. For example in JP 61235470, incorporated by reference herein, a primer composition is disclosed, comprising a rubber selected from natural rubber, polyisobutylene rubber, butyl rubber, styrene/butadiene rubber and ethylene/propylene (/diene terpolymer) rubber which are non-polar natural and synthetic rubbers, and modified products thereof, together with an inorganic cement material such as for example Portland cement, and optionally additives such as a filler, a softener, a tackifier, an antioxidant, and a colorant, dissolved in an organic solvent such as for example toluene. The composition may be used as a primer to protect metal pipes from corrosion.

JP 61254264, incorporated by reference herein, discloses a primer spray comprising natural rubber and synthetic rubber such as butyl rubber or polyisobutene, an adhesive material and an ageing inhibitor, dissolved in a solvent such as benzene or toluene.

Paint compositions are for example known from JP 61019671, incorporated by reference herein, which discloses a corrosion-resistant paint composition for the interior of vessels. The composition comprises a specific modified epoxy resin (100 parts by weight), a bituminous substance (30-600 parts by weight) and a liquid synthetic rubber (0-50 parts by weight). The rubber may for example be a polyisobutene with a molecular weight of 200 - 50,000 g/mol.

US 4.282.126, incorporated by reference herein, discloses an acoustically transparent, camouflage antifouling paint for coating rubber substrates without adversely affecting the chemical stability and sound absorbing characteristics of such substrates. The composition essentially comprises about 2 - 23 wt.% polyisobutylene polymer of molecular weight from about 81,000 to 99,000, about 23 - 29 wt.% rosin, about 45 - 57 wt.% tributyltin fluoride and about 9 - 11 wt.% pigment.

WO 98/21765, incorporated by reference herein, discloses curable sealant compositions for coating a conductive bushing for a lead-acid cell or battery. The sealant compositions comprise a sealing elastomer in an amount from about 1 % to about 15 % by weight and a solvent in an amount of up to about 99 % by weight. Sealing elastomers include for example polyurethanes, polysilanes, polybutenes and polyisobutenes. Most preferably, the sealing elastomer is polyisobutene and the solvent D-limonene. The hardening composition preferably also comprises a reinforcing agent in an amount effective to reinforce the sealant elastomer upon curing of the sealant composition. Suitable reinforcing agents include rosins such as wood rosin or gum rosin, and paraffins or other waxes.

There is a need for a composition for coating a substrate that is widely applicable to a wide range of different substrates, that is easy to apply to the substrate, and that is able to resist variations in the substrate, caused for example by expansion and shrinkage due to temperature fluctuations, mechanical vibrations and/or mechanical stresses. In addition, there is a need for a composition for coating a substrate whereby less, hardly any or even no harmful substances are released when the composition is applied to the substrate.

**Summary of the invention**

The present invention relates to a composition comprising:

(a) 5 wt.% to 30 wt.% of an amorphous polymer, said amorphous polymer having a glass transition temperature of lower than -20°C,
(b) 15 wt.% to 60 wt.% of a filler, and
(c) 10 wt.% to 80 wt.% of a solvent,

wherein the amorphous polymer is selected from the group consisting of:

(i) a polymer comprising 50.0 % to 98 % by weight of isobutene and 2 % to 50.0 % of a $C_2$ - $C_{12}$ alkene other than isobutene, a $C_4$ - $C_{12}$ alkadiene, or a mixture thereof, based on the total weight of the polymer;
(ii) a polymer comprising more than 98 % to 100 % by weight of isobutene, based on the total weight of the polymer; and
(iii) a mixture of (i) and (ii),

wherein the amounts of (a), (b) and (c) are calculated on the total weight of the composition, and wherein the solvent is a terpene having a boiling point of 130°C to 270°C.

The composition may be used for example as a coating composition, a primer composition or a paint composition.

The present invention also relates to a process for the application of a protective layer to a substrate, the process comprising application of a layer of the composition according to the present invention.

In addition, the present invention relates to a container comprising the composition according to the invention and a propellant.

**Detailed description of the invention**

The verb "to comprise" and its conjugations as used in this description and in the claims are used in their non-limiting sense to mean that items following the word are included, but items not specifically mentioned are not excluded.

In addition, reference to an element by the indefinite article "a" or "an" does not exclude the possibility that more than one of the element is present, unless the context clearly requires that there is one and only one of the elements. The indefinite article "a" or "an" thus usually means "at least one".

The term "polymer" is meant to include homopolymers and copolymers.

The term "copolymer" is meant to include polymers comprising two or more monomers.

The term "poly-alkene" is herein used as a very general term and it refers to polymers comprising at least an alkene.

Commonly, a skilled person uses the term "polyisobutene" in a general manner when referring to an amorphous polymer comprising isobutene monomers as a major component, and optionally further monomers, such as 1-butene, 2-butene and/or butadiene. These amorphous polymers have similar properties, in particular in terms of glass transition temperatures and surface tension. Depending on the desired purity of the polyisobutenes, they may be prepared by various methods (*cf.* Ullmanns "Encyklopädie der technischen Chemie", 4th Ed., Vol. 19, pages 216 - 223, 1980, and Vol. 13, pages 621 - 623, 1977. According to the general common use, the term "polyisobutene" includes polymers that comprise isobutene monomers in amounts such as at least about 50 wt.%, at least about 75 wt.%, at least about 90 wt.% or at least about 95 wt.%, and a monomer selected from the group consisting of $C_2$ - $C_{12}$ alkenes, $C_4$ - $C_{12}$ alkadienes, and mixtures thereof in amounts such as about 50 wt.% or less, about 25 wt.% or less, about 10 wt.% or less or about 5 wt.% or less, calculated on the total weight of the polyisobutene. As such, according to the general common use, the term "polyisobutene" encompasses polymers such as polybutenes and essentially non-cross-linked butyl rubbers as described below. In the present application, the term "polyisobutene" is used for an isobutene polymer as defined above.

In the present application, the term "polyisobutene homopolymer" is used in order to distinguish polyisobutenes having a very high isobutene content from, for example, polyisobutenes having a lower isobutene content as described above, and from polybutenes and butyl rubbers as described below. Thus, the term "polyisobutene homopolymer" as used herein refers to a polymer consisting essentially of isobutene monomers, *i.e.* a polymer comprising more than about 98 % to about 100 %, preferably about 99 % to about 100 %, more preferably about 99.5 % to about 100 %, even more preferably about 99.7 % to about 100 %, and in particular about 99.9 % to about 100 %, all by weight of isobutene, based on the total weight of the polymer.

The term "polybutene" as used herein refers to a polymer prepared from a $C_4$-fraction obtained from the oil refining process (such as a $C_4$-fraction comprising 1-butene, 2-butene, isobutene and optionally butadiene).

The term "butyl rubber" as used herein refers to a polymer of about 95 wt.% to about 98 wt.% isobutene and about 2 wt.% to about 5 wt.% isoprene, based on the total weight of the polymer.

**The amorphous polymer**

According to the present invention, the amorphous polymer is preferably a hydrocarbonaceous polymer. The hydrocarbonaceous polymer is optionally (partly) halogenated, preferably by bromine, chlorine or fluorine. It is preferred that the hydrocarbonaceous polymer is essentially non-vulcanised (non-cross-linked) so that its cold flow properties are optimised. The amorphous polymer may be a blend of two different amorphous polymers.

It is preferred that the amorphous polymer has a number average molecular weight $M_n$ of 500 to 1,000,000, more preferably within the range of about 1000 to about 1,000,000, even more preferably within the range of about 2000 to about 1,000,000, even more preferably within the range of about 2300 to about 900,000 and in particular within the range of about 10,000 to about 800,000. The molecular weight distribution $M_w/M_n$ of the amorphous polymer is preferably between 1 to about 10, more preferably 1 to about 5, even more preferably 1 to about 4 and most preferably about 1.5 to about 3.5. Number average molecular weights and molecular weight distributions can for example be determined by gel permeation chromatography (GPC) as is well known in the art.

According to the present invention, the amorphous polymer has a glass transition temperature $T_g$ of less than -20°C, preferably less than about -40°C, more preferably less than about -50°C and most preferably less than about -60°C. Additionally, it is preferred that the amorphous polymer has a surface tension of less than about 50 mN/m at 20°C, preferably less than about 40 mN/m at 20°C. The glass transition temperature or glass transition temperatures can be determined by differential scanning calorimetry (DSC) as is well known in the art. The surface tension can also be determined by methods known in the art (*cf.* S. Wu, J. Colloid. Interface. Sci. 31, 153, 1969; D.G. LeGrand, G.L. Gaines, Jr., J. Colloid. Interface Sci. 31, 162, 1969;.

The amorphous polymer is a poly-alkene. Preferred monomers for manufacturing the amorphous polymer are monomers selected from the group consisting of $C_2$ - $C_{12}$ alkenes, $C_4$ - $C_{12}$ alkadienes, and mixtures thereof, wherein the alkene and/or alkadiene may optionally be substituted with one or more bromine, chlorine or fluorine atoms. The alkene may be an α-alkene or an internal alkene. The diene may be conjugated or non-conjugated.

Preferably, the $C_2$ - $C_{12}$ alkene is selected from the group consisting of ethene, propene, 1-butene, 2-butene, isobutene (2-methyl propene), 1-pentene, 1-hexene, 2-methyl-1-pentene, 4-methyl-1-pentene, 1-octene, and mixtures thereof

Preferably, the $C_4$ - $C_{12}$ alkadiene is selected from the group consisting of butadiene, isoprene (2-methyl-1,3-butadiene), 2,4-dimethyl butadiene, penta-1,3-diene, 3-methyl-1,3-pentadiene, 2,4-hexadiene, 2-neopentyl-1,3-butadiene, 2-methyl-1,5-hexadiene, 2,5-dimethyl-2,4-hexadiene, 2-methyl-1,4-pentadiene, 2-methyl-1,6-heptadiene, cyclopentadiene, methyl cyclopentadiene, cyclohexadiene, 1-vinyl-cyclohexadiene, norbornadiene, 5-ethylidene-2-norbornene, divinylbenzene, dicylopentadiene, 1,4-hexadiene, 5-vinyl-2-norbornene, and mixtures thereof.

Amorphous polymers having a glass transition temperature of lower than about -20°C are well known in the art and are for example disclosed in Kirk-Othmer, Encyclopedia of Chemical Technology, 4th. Ed., Vol. 8, pages 905 - 1093, 1993, and 4th Ed, Vol. 9, pages 1 - 37, 1994, and in the Polymer Handbook, 3rd. Ed., J. Bandrup, E.H. Immergut (Eds.), 1989, The Polymer Handbook gives many examples for amorphous polymers having a glass transition temperature of lower than about -20°C: butyl rubber (non-vulcanised) of about -71°C, poly(1-hexene) (prepared by Ziegler-Natta catalysis; *cf.* ref. 1072: J. Bourdariat, R. Isnard, J. Odin, J. Polym. Sci., Polym. Phys. Ed. 11, 1817 - 1828, 1973, of about -58°C (page VI/213), isotactic poly(1-butene) (*cf.* for example R.W. Warfield, R. Brown, J. Polym. Sci. A-2 5, 791, 1967, of about -24°C (page VI/213), and poly(isobutene) of about -73°C (page VI/214). It should be noted that some of these polymers can sometimes be (partly) crystalline which is often dependent from catalyst compositions and process conditions employed in the polymerisation process. For example, EP 300.638 A2, discloses a process for the preparation of highly crystalline poly(1-butene). However, it can be envisaged that *e.g.* a certain polyisobutene, a certain polybutene or a certain butyl rubber, may have a glass transition temperature that differs from the value listed in the Polymer Handbook. Atactic polypropene has a glass transition temperature of about -20°C (*cf.* U. Gaur, B. Wunderlich, J. Phys. Chem. Ref. Data 10, 1052 - 1063, 1981,

Amorphous polymers having a surface tension of less than about 50 mN/m at 20°C are also well known in the art. The Polymer Handbook, 3rd. Ed., J. Bandrup, E.H. Immergut (Eds.), 1989, gives various examples for such amorphous polymers: polyisobutene ($M_n$ = 2300): 33.6 mN/m at 20°C; atactic polypropene: 29.4 mN/m at 20°C; branched polyethene ($M_n$ = 7000): 35.3 mN/m at 20°C; ethene propene copolymers ($M_w$ ranging from about 15,000 to about 63,000; propene content ranging from about 34 mol % to about 60 mol%): 30.7 - 33.8 mN/m at 20°C; poly(4-methyl-1-pentene): 25 mN/m at 20°C. It should be noted that surface tension is essentially independent from molecular weight when the molecular weight is greater than about 2000 and that the surface tension reached within about 1 mN/m of the value at indefinite molecular weight.

According to the present invention, the amorphous polymer is selected from the group consisting of:

(a) a polymer comprising 50.0 % to 98 % by weight of isobutene and 2 % to 50.0 % of a $C_2 - C_{12}$ alkene other than isobutene, a $C_4 - C_{12}$ alkadiene, or a mixture thereof, based on the total weight of the polymer;
(b) a polymer comprising more than 98 % to 100 % by weight of isobutene, based on the total weight of the polymer; and
(c) mixtures of (a) and (b).

Examples for group (a) include "polyisobutenes", "polybutenes" and "butyl rubbers". Examples for group (b) include "polyisobutene homopolymers".

Preferably, the amorphous polymer is selected from the group consisting of polyisobutenes, polybutenes, butyl rubbers and mixtures thereof. Yet even more preferably, the amorphous polymer is a polyisobutene. Most preferably, the amorphous polymer is a polyisobutene homopolymer. All these polymers have a glass transition temperature of less than about -20°C as is disclosed above.

The polybutene has preferably also a number average molecular weight $M_n$ of about 500 to about 20,000, more preferably of about 1000 to about 20,000, a molecular weight distribution of about 1.5 to about 3, a density of about 0.90 to about 0.98 g/cm³ and a kinematic viscosity of about 200 cSt (mm².s⁻¹) to about 100,000 cSt (mm².s⁻¹) at 100°C according to ASTM D 445 (data in Saybolt Universal Seconds which are used in *e.g.* the Ineos datasheet September 2008 can be converted into mm².s⁻¹ according to ASTM D 2161). Suitable polybutenes include for example several Indopol grades available from Ineos (Great Britain), several polybutene grades available from Kermat (Belgium), several Nisseki polybutene grades available from JX Nippon Oil & Energy, and several KVIS grades available from Kothari Petrochemicals (India). For example, Indopol H-300 has a glass transition temperature of about -66.9°C (DSC), a number average molecular weight $M_n$ of about 1300 (GPC), a molecular weight distribution of about 1.65 (GPC), a density of about 0.904 g/cm³ and a kinematic viscosity of about 605 to about 655 cSt at 100°C (Ineos datasheet September 2008). Indopol H-18000 has a number average molecular weight $M_n$ of about 6000 (GPC), a molecular weight distribution of about 1.70 (GPC), a density of about 0.921 g/cm³ and a kinematic viscosity of about 36000 to about 45000 cSt at 100°C (Ineos datasheet September 2008). KVIS 30 has a molecular weight of about 1250 to about 1350, a kinematic viscosity of about 600 to 697 cSt at 100°C and a density of about 0.8910 to about 0.910 g/cm³.

The butyl rubber has preferably a Mooney viscosity ML 1 + 8 (ASTM D 1646; 125°C) of about 25 to about 75 and a level of unsaturation of about 1.0 to about 3.0 mol%. Suitable materials include Exxon™ Butyl Rubber which has a density of 0.92 g/cm³ and Lanxess Butyl 101-3 which has a density of 0.92 g/cm³, a Mooney viscosity ML 1 + 8 (ASTM D 1646; 125°C) of 51 ± 5 and an unsaturation of 1.75 ± 0.20 mol %.

The polyisobutene has preferably a number average molecular weight $M_n$ of about 500 to about 1,000,000, more preferably within the range of about 1000 to about 1,000,000, even more preferably within the range of about 2000 to about 1,000,000, even more preferably within the range of about 2300 to about 900,000 and in particular within the range of about 10,000 to about 800,000. The molecular weight distribution $M_w/M_n$ of the polyisobutenes is preferably between 1 to about 10, more preferably 1 to about 5, even more preferably 1 to about 4 and most preferably about 1.5 to about 3.5.

The number average molecular weight $M_n$ of the polyisobutenes is determined by GPC for the lower molecular weights, *e.g.* up to about 100,000. For the higher number average molecular weights, they are determined by viscosity measurements (Staudinger Index $J_o$, formerly known as intrinsic viscosity), wherein the Staudinger Index is calculated from the flow time at 20°C through capillary 1 of an Ubbelohde viscometer (for measuring the flow time, a diluted polymer solution is used) using the following formulas:

$$J_o = \eta_{sp} / c \, (1 + 0.31 \times \eta_{sp}) \; [cm^3/g]$$

$$\eta_{sp} = (t/t_o) - 1$$

wherein t is the flow time of the solution, with Hagenbach-Couette correction, $t_o$ is the flow time of the solvent (*e.g.* isooctane), with Hagenbach-Couette correction, and c is the concentration if the solution in g/cm³. The number average molecular weight $M_n$ is then calculated as follows:

$$M_n = 0.94x\sqrt{\frac{1000\,xJ_0}{2.27}}$$

Reference is made to the BASF brochure "Glissopal® 1000, 1300 and 2300" of December 2005 and to the BASF brochure "Oppanol® B types" (B10 to B15) of April 2005, both incorporated by reference.

The polyisobutenes to be used in the composition according to the present invention preferably have a Staudinger Index $J_o$ of about 10 to about 1500 cm³/g, preferably of about 20 to about 1000 cm³/g, as determined at 20°C.

The polyisobutenes have further preferably a surface tension of less than about 40 mN/m at 20°C. The density of the polyisobutenes is preferably between about 0.86 to about 0.98 g/cm³.

The polyisobutenes may be prepared in various ways. Polymerisation may be conducted in single stage processes or in multi stage processes. It is preferred that the polymerisation is conducted in the liquid phase using a Lewis acid as catalyst, preferably boron trifluoride complex catalyst, optionally in the presence of a cocatalyst. Such processes are well known in the art.

Preferred polyisobutenes are from the Glissopal and Oppanol grades, in particular Oppanol grades, which are commercially available from BASF, in particular from the Oppanol B type. Other preferred polyisobutenes are available from Nippon Oil, in particular the Tetrax grades. These polyisobutenes are in this document classified as "polyisobutene homopolymers", *i.e.* polymers comprising more than 98 wt.% of isobutene, based on the total weight of the polymer.

**The solvent**

The solvent is a terpene having a boiling point of about 130°C to about 270°C, preferably a boiling point of about 150°C to about 250°C.

Terpenes belong to a well-known class of organic molecules comprising isoprene units. Monoterpenes consist of two isoprene units and have the molecular formula $C_{10}H_{16}$. Examples of monoterpenes are geraniol, limonene and terpineol. Sesquiterpenes consist of three isoprene units and have the molecular formula $C_{15}H_{24}$. Examples of sesquiterpenes are farnesenes and farnesol. Diterpenes consist of four isoprene units and have the molecular formula $C_{20}H_{32}$. Examples of diterpenes are cafestol, kahweol, cembrene and taxadiene. Sesterterpenes are terpenes having 25 carbons and five isoprene units. An example of a sesterterpene is geranylfarnesol. Triterpenes consist of six isoprene units and have the molecular formula $C_{30}H_{48}$. Tetraterpenes consist of eight isoprene units and have the molecular formula $C_{40}H_{64}$. Examples of tetraterpenes include lycopene, monocyclic gamma-carotene, and the bicyclic alpha- and beta-carotenes.

In a preferred embodiment of the invention, the solvent is a monoterpene ($C_{10}H_{16}$), in particular cyclic monoterpenes. Preferably, the solvent is selected from the group of naturally occurring monoterpenes, such as for example limonenes, pinenes, terpinenes, terpinolenes, and mixtures thereof.

In another preferred embodiment, the solvent is selected from the group of D-limonene, L-limonene, DL-limonene and mixtures thereof. DL-limonene is also known as racemic limonene or dipentene, as will be known to a person skilled in the art. D-limonene may be obtained as a by-product of citrus fruit cultivation and the citrus fruit juice industry, and it is the main component of the oil that may be isolated from the peel of citrus fruit. The naturally occurring enantiomer of limonene in citrus fruits is D-limonene, which is the *(R)*-enantiomer of limonene. When citrus fruits are pressed to extract their juice, oil is also expressed from the peel. This cold-pressed oil is also called food grade D-limonene. Steam extraction of the citrus peel gives a second yield of the oil, which is called technical grade D-limonene.

In general, the term "limonene" denotes technical grade D-limonene. The amount of D-limonene in technical grade D-limonene is generally over about 90 wt.%. The terms "orange terpenes" and "orange oil" also denote a solvent with a high content (generally over about 90 wt.%) of D-limonene. The terms "limonene", "D-limonene", "orange terpenes" and "orange oil" are often used interchangeably in prior art.

As will be clear to a person skilled in the art, the exact composition of orange oil, orange terpenes and limonene derived from citrus fruit may vary, for example according to regional and seasonal variations. For example, Kirk-Othmer, Enclopedia of Chemical Technology, 4th. Ed., Vol. 17, page 621 (1996), discloses the following typical composition for 98.5 wt.% of the cold-pressed Valencia orange oil: 95 wt. % limonene (boiling point about 176°C), 2 wt. % myrcene (boiling point about 167°C) + octanal, 0.4 wt.% α-pinene (boiling point about 155°C), 0.3 wt.% linalool (boiling point about 198°C), 0.3 wt.% decanal, 0.2 wt.% sabinene (boiling point about 163°C), 0.1 wt.% geranial (boiling point about 229°C), 0.1 wt. neral (boiling point about 229°C) and 0.1 wt.% dodecanal. Orange oil may further comprise low amounts of α- and β-sisenal. Kirk-Othmer, Enclopedia of Chemical Technology, 4th. Ed., Vol. 17, page 622 (1996), discloses the following typical composition for 97.3 wt.% Israel grapefruit oil: 93 wt. % limonene, 2 wt. % myrcene, 0.3 wt.% octanal, 1 wt.% α-pinene, 0.2 wt.% decanal, 0.4 wt.% sabinene, 0.2 wt.% β-pinene, 0.1 wt.% trans-β-ocimene (boiling point about 100°C at 70 mm Hg) and 0.1 wt.% γ-terpinene (boiling point in the range of 173° to 183°C). Kirk-Othmer, Enclopedia of Chemical Technology, 4th. Ed., Vol. 17, page 639 (1996), discloses typical compositions for Spanish and Italian bitter orange oils and these oils contain 94.3 and 92.4 wt.% of limonene, respectively. Lemon oils, however, contain generally far less than 90 wt.% of limonene: Kirk-Othmer, Enclopedia of Chemical Technology, 4th. Ed., Vol. 17, page 639 (1996), discloses typical compositions for Sicilian and California lemon oils which contain 65.2 and 65.7 wt.% of limonene, respectively.

In general, the amount of D-limonene present in limonene, orange oil and orange terpenes is more than about 90 wt %, based on the total weight of the limonene, the orange oil or the orange terpenes

In a further preferred embodiment of the invention, the solvent is selected from the group of D-limonene, orange terpenes and orange oil.

An additional advantage of the use of terpenes of a natural origin such as for example orange terpenes, orange oil and/or limonene as a solvent is that these solvents are biodegradable and therefore environment friendly. For example, D-limonene is GRAS (Generally Recognized As Safe) rated by the American Food and Drug Adminstration (FDA). In addition, less, or hardly any harmful substances are released when the composition according to the present invention is applied to a substrate.

**The composition**

The composition according to the present invention comprises:

(a) 5 wt.% to 30 wt.% of an amorphous polymer, said amorphous polymer having a glass transition temperature of lower than -20°C,
(b) 15 wt.% to 60 wt.% of a filler, and
(c) 10 wt.% to 80 wt.% of a solvent,

wherein the amorphous polymer is selected from the group consisting of:

(i) a polymer comprising 50.0 % to 98 % by weight of isobutene and 2 % to 50.0 % of a $C_2$ - $C_{12}$ alkene other than isobutene, a $C_4$ - $C_{12}$ alkadiene, or a mixture thereof, based on the total weight of the polymer;
(ii) a polymer comprising more than 98 % to 100 % by weight of isobutene, based on the total weight of the polymer; and
(iii) a mixture of (i) and (ii),

wherein the amounts of (a), (b) and (c) are calculated on the total weight of the composition, and wherein the solvent is a terpene having a boiling point of 130°C to 270°C.
Preferably, the composition according to the preferred embodiment comprises (a) 10 wt.% to 25 wt.% of the amorphous polymer, said amorphous polymer having a glass transition temperature of lower than -20°C, (b) 20 wt.% to 60 wt.% of a filler, and (c) 15 wt.% to 70 wt.% of a solvent.
Even more preferably, the composition according to the preferred embodiment comprises (a) about 15 wt.% to about 25 wt.% of the amorphous polymer, said amorphous polymer having a glass transition temperature of lower than about -20°C, (b) about 30 wt.% to about 60 wt.% of a filler, and (c) about 15 wt.% to about 55 wt.% of a solvent.
The composition according to the present invention may further comprise an antioxidant, preferably in an amount of about 0.01 wt.% to about 5 wt.%, preferably about 0.05 wt.% to about 2.5 wt.%, based on the total weight of the amorphous polymer in the composition.
The invention also relates to a composition comprising:

(a) 10 wt.% to 25 wt.% of an amorphous polymer, said amorphous polymer having a glass transition temperature of lower than -20°C,
(b) 20 wt.% to 60 wt.% of a filler, and
(c) 15 wt.% to 70 wt.% of a solvent,

wherein the amorphous polymer is selected from the group consisting of:

(i) a polymer comprising 50.0 % to 98 % by weight of isobutene and 2 % to 50.0 % of a $C_2$ - $C_{12}$ alkene other than isobutene, a $C_4$ - $C_{12}$ alkadiene, or a mixture thereof, based on the total weight of the polymer;
(ii) a polymer comprising more than 98 % to 100 % by weight of isobutene, based on the total weight of the polymer; and
(iii) a mixture of (i) and (ii),

wherein the amounts of (a), (b) and (c) are calculated on the total weight of the composition, and wherein the solvent is a terpene having a boiling point of 130°C to 270°C.
Preferably, said amorphous polymer is a polyisobutene homopolymer.

**The filler**

According to the present invention, the filler may consist of a single material or may comprise a combination of different materials. The filler may be an organic or an inorganic material. Suitable organic materials are for example cellulose, polystyrene, polyvinyl chloride, polyethene, polypropene, polyisoprene, rubber, polyamide and polyester. Suitable inorganic materials are for example minerals, salts and oxides, e.g. calcium carbonate, calcium sulphate, boron sulphate, aluminium hydroxide, aluminium oxide, magnesium oxide, silicon dioxide, titanium dioxide, ground quartz, glass, talc, slate, kaolin and bentonite.
It is preferred that the filler has a density of about 1.0 to about 4.0 kg/dm$^3$, preferably about 1.5 to about 3.5 kg/dm$^3$, at 20°C according to DIN ISO 787/10. It is furthermore preferred that the filler consists essentially of an inorganic material, preferably at least 75 wt.%, more preferably at least 90 wt.% and most preferably at least 95 wt.%, based on the total weight of the filler material. It is furthermore preferred that the filler material has a very low water solubility, preferably of less than 0.1 g/l (20°C; according to DIN ISO 787/8), more preferably less than 0.05 g/l. It is preferred that the filler is in the form of particles with a particle size of about 10 µm or less, preferably about 5 µm or less, about 3 µm or less, about 2 µm or less or about 1 µm or less. In a preferred embodiment, the particle size is about 2 µm or less.
According to a particular embodiment of the present invention, the filler material comprises, or more preferably consists essentially of calcium carbonate. A very suitable commercially available material is Omyalite 95T (available from Omya GmbH, Köln, Germany).
According to another particular embodiment of the invention, the filler material comprises, or more preferably consists essentially of talc. In another embodiment, the filler material comprises silicon dioxide, for example fumed silica such as Aerosil.

**Further components**

The composition according to the invention may further comprise optional components such as for example one or more anti-oxidants, one or more colorants and/or one or more petroleum derived products such as waxes, petrolatum products and/or vaseline.

According to a preferred embodiment, the composition according to the present invention comprises an anti-oxidant. The anti-oxidant may be a primary anti-oxidant, a secondary anti-oxidant, a multifunctional anti-oxidant (*i.e.* an antioxidant combining primary and secondary antioxidant functions) or a lactone. The antioxidant may comprise a combination of various antioxidants.

According to the present invention, the primary antioxidants are preferably selected from the group consisting of sterically hindered phenol compounds, sterically hindered alkylthiomethylphenol or arylthiomethylphenol compounds, and secondary aromatic amines. Such compounds are well known in the art and include the sterically hindered phenol compounds 2,6-di-t-butyl-4-methylphenol, Irganox® 1330, Irganox® 1010, Irganox® 1098, Irganox® 1076, Irganox® 245, Irganox® 259, Irganox® 1035, Irganox® 2246, Irganox® 3114 and Irganox® 3125, the sterically hindered alkylthiomethylphenol Irganox® 1520, *i.e.* 2,4-di-octylthiomethyl-6-methyl phenol, and the secondary aromatic based antioxidant comprising (polymerized) 1,2-dihydro-2,2,4-trimethylquinoline, such as for example Agerite® MA.

According to the present invention, the secondary antioxidants are preferably selected from the group consisting of phosphites and thio-esters. Suitable secondary antioxidants are for example Irgafos® 168, Irgafos® 12 and Irgafos® P-EPQ (all phosphites), and Lowinox® TBM-6, BNX® DLTDP (CAS No. 123-28-4) and Morstille 18 DSTDP (all thio-esters).

The multifunctional antioxidant preferably comprises both a primary and a secondary antioxidant function. Examples of multifunctional antioxidants are Irganox® L 115 and Irganox® 565.

An example of a lactone that can be used as anti-oxidant is Irganox® HP-136.

According to the conference paper "New Stabilizer Solutions for Polyolefin Film Grades", F. Stricker, M. Horton (both of Ciba Specialty Chemicals) European Tappi PLACE Conference, May 12 - 14, 2003, Rome, Italy, the amorphous polymer is subject to an autooxidation cycle which includes various damaging stresses induced by high temperatures and shear rates that prevail during compounding and further processing. Free radicals are first generated by scission of C-C bonds and C-H bonds. In the first cycle, these free radicals may react with entrapped oxygen under the formation of peroxide radicals. The peroxy radicals react with polymer chains and are converted into unstable hydroperoxides together with a carbon-centered free radical which enters the first cycle.

In the second cycle, the hydroperoxides are decomposed by heat, UV light, catalyst impurities present in the amorphous polymer, or other impurities, into alkoxy radicals and hydroxy radicals, the latter being able to further react with the amorphous polymer and to form more carbon-centered radicals which again enter the first cycle.

The formation of free radicals on polymer molecules leads to usually irreversible scission and crosslinking of polymer chains which has a profound effect on the polymer structure and properties, *e.g.* molecular weight, molecular weight distribution and degree of branching.

To counter these undesired degradation reactions, antioxidants are frequently used in polymer compositions. For example, sterically hindered phenol compounds (a typical example of primary anti-oxidants) scavenge oxygen-centered free radicals such as alkoxy, hydroxy and peroxy species and provide in particular long term thermal stability, but also stability during compounding and further processing. Phosphites (a typical example of secondary antioxidants) decompose hydroperoxides into relatively inert compounds before they can split into oxygen-centered radicals. Phosphites provide in particular colour stability and as well as stability during compounding and further processing.

Lactones are a class of antioxidants which are capable of not only inhibiting the autooxidation cycle, but also to shut it down as soon as the autooxidation cycle starts. Lactones are able to scavenge both oxygen-centered radicals and carbon-centered radicals and their mechanism of action is believed to be the formation of very stable benzofuranyl radicals. They inhibit therefore the propagation of polymer radicals. Lactones can also donate hydrogen atoms to phenoxy radicals to regenerate sterically hindered phenol compounds.

According to the present invention, the composition preferably comprises a primary antioxidant, wherein the primary anti-oxidant is preferably selected from the group of sterically hindered phenol compounds and secondary aromatic amines, most preferably from the group of sterically hindered phenol compounds.

According to the present invention, the composition preferably comprises a secondary antioxidant, wherein the secondary anti-oxidant is preferably selected from the group of phosphites.

According to a more preferred embodiment, the composition comprises a combination of a primary antioxidant and a secondary antioxidant, preferably a combination of a primary antioxidant and a secondary antioxidant which have a synergistic effect. A suitable combination is Irganox® 1010 and Irgafos® 168.

According to an even more preferred embodiment, the composition comprises a combination of a primary antioxidant, a secondary antioxidant and a lactone. In a further preferred embodiment the lactone is Irganox® HP-136.

Further examples of primary antioxidants, secondary antioxidants, multifunctional antioxidants and lactones are for example disclosed in WO 2005/005528.

**Application of the composition**

The present invention further relates to a process for the application of a protective layer to a substrate, the process comprising application of a layer of a composition according to the invention to the surface of the substrate or a part thereof, said composition comprising:

> (a) 5 wt.% to 30 wt.% of an amorphous polymer, said amorphous polymer having a glass transition temperature of lower than -20°C,
> (b) 15 wt.% to 60 wt.% of a filler, and
> (c) 10 wt.% to 80 wt.% of a solvent,

wherein the amorphous polymer is selected from the group consisting of:

> (i) a polymer comprising 50.0 % to 98 % by weight of isobutene and 2 % to 50.0 % of a $C_2$ - $C_{12}$ alkene other than isobutene, a $C_4$ - $C_{12}$ alkadiene, or a mixture thereof, based on the total weight of the polymer;
> (ii) a polymer comprising more than 98 % to 100 % by weight of isobutene, based on the total weight of the polymer; and
> (iii) a mixture of (i) and (ii),

wherein the amounts of (a), (b) and (c) are calculated on the total weight of the composition, and wherein the solvent is a terpene having a boiling point of 130°C to 270°C.

Preferably, the composition according to this preferred embodiment comprises (a) 10 wt.% to 25 wt.% of the amorphous polymer, said amorphous polymer having a glass transition temperature of lower than -20°C, (b) 20 wt.% to 60 wt.% of a filler, and (c) 15 wt.% to 70 wt.% of a solvent.

More preferably, the composition according to this preferred embodiment comprises (a) about 15 wt.% to about 25 wt.% of the amorphous polymer, said amorphous polymer having a glass transition temperature of lower than about -20°C, (b) about 30 wt.% to about 60 wt.% of a filler, and (c) about 15 wt.% to about 55 wt.% of a solvent.

The invention thus also relates to a process for the application of a protective layer to a substrate, the process comprising application of a layer of a composition according to the invention to the surface of the substrate or a part thereof, said composition comprising:

> (a) 10 wt.% to 25 wt.% of an amorphous polymer, said amorphous polymer having a glass transition temperature of lower than -20°C,
> (b) 20 wt.% to 60 wt.% of a filler, and
> (c) 15 wt.% to 70 wt.% of a solvent,

wherein the amorphous polymer is selected from the group consisting of:

> (i) a polymer comprising 50.0 % to 98 % by weight of isobutene and 2 % to 50.0 % of a $C_2$ - $C_{12}$ alkene other than isobutene, a $C_4$ - $C_{12}$ alkadiene, or a mixture thereof, based on the total weight of the polymer;
> (ii) a polymer comprising more than 98 % to 100 % by weight of isobutene, based on the total weight of the polymer; and
> (iii) a mixture of (i) and (ii),

wherein the amounts of (a), (b) and (c) are calculated on the total weight of the composition, and wherein the solvent is a terpene having a boiling point of 130°C to 270°C.

In a preferred embodiment, the amorphous polymer is a polyisobutene homopolymer.

The application of the protective layer to the substrate has a number of advantages. A layer of the composition according to the invention is hardly permeable or even impermeable to water and water vapour, atmospheric oxygen, bacteria and a large number of other chemicals. The protective layer has viscoelastic and cold-flow properties and confers self-healing or self-repairing properties to the protective layer, in particular when a mechanical protective layer is applied with stress to said protective layer (see below). Additonally, the conventioanlly required pre-treatment of the substrate is minimal or even unnecessary.

A layer according to the invention may be applied to many different types of substrates. The protective layer may for example serve as a gas, vapour and liquid barrier, for example for the corrosion prevention of metals, as a gas and liquid proofing of concrete, gypsum and other mineral construction materials, or as gas and liquid proofing of construction materials originating from biological resources (*e.g.* wood, hemp, flax, etc.), for example in order to reduce biological deterioration. The layer may also serve as gas and liquid proofing of permeable coating materials, *e.g.* as a primer. Furthermore, the layer may serve as a primer on substrates such as for example polyethylene (PE), polypropylene (PP), glass or concrete, in order to enable adhesion of consecutive applied coatings.

The substrate is in particular a substrate that is exposed to mechanical forces such as mechanical vibrations and mechanical stresses, to temperature stresses or fluctuations, to humid or damp conditions, to chemical stresses or to a combination thereof. The substrate comprises preferably a metal or a metal alloy, such as for example steel, iron, copper or zinc, concrete, a polyolefin, an epoxy resin, a polyurethane, wood, or a combination thereof Preferably, the substrate is selected from the group of materials consisting of metals, metal alloys, concrete, polyolefins, epoxy resins, polyurethanes, and wood.

For example, some substrates are known to be difficult to coat with a layer of paint. Such substrates include metal substrates having a corroded or rusty surface, layers of polyethylene, polypropylene and other polyolefins such as for example polystyrene and polyvinyl chloride, and layers of epoxy resins or polyurethanes. Such substrates can, however, readily be coated with a layer of the composition according to the present invention. In addition, the composition according to the present invention is very suitable for use as a preservative primer or coating on wood.

As described above, the composition according to the invention can even be applied to a rusty surface. The composition may be applied to a dry layer of rust (e.g. "rust back") but also to a rust layer comprising water (e.g. "flash rust").

In some cases it may be advantageous to subject the substrate to a pre-treatment before the application of the composition according to the invention. Such a pre-treatment may include for example the removal of loose fragments and parts from the surface, and/or removal of potential contaminants such as oil or grease. For example, a suitable pre-treatment of a wooden substrate may comprise the sanding of the substrate. A suitable pre-treatment of metal substrates may comprise for example brushing (ST2/ST3) or sand blasting (ST 2½), followed by a control of the substrate according to NEN-EN-ISO Standard No. 8501-1.

There are no particualr requirements regarding the roughness of the substrate surface. As a consequence, the requirements that the surface of a metal substrate to be coated has to meet are far less rigorous than in the case of a conventional paint, coating or primer composition known from the prior art.

The composition according to the invention may be applied to the surface of the substrate in various ways, for example with the aid of a filling knife, a doctor blade or spreader, or as a thin-flowing product, in which case the composition is applied to the surface of the substrate by mechanical means. Examples are painting with a brush, immersion, or float coating, wherein the composition is poured over the substrate. The composition may also be applied by nebulising or spraying, for example as an aerosol.

In some cases, problems may arise when applying a composition to the surface of a substrate, for example if the surface to be coated is not readily accessible, which may be the case with corners or the inside of hollow objects. It may be advantageous in such cases to apply the composition to the surface of the substrate by immersing the latter in the composition or by using a spraying technique or an injection technique involving the use of an aerosol can, a spray gun, a putty applicator, and the like.

In a preferred embodiment the composition is applied to the substrate by spraying. The composition is then applied in the form of a sprayable product. In another preferred embodiment, the composition is sprayed on the surface of the substrate with the aid of air or a propellant gas. Examples include spraying with a conventional paint gun or spray gun, or nebulising from an aerosol can containing air or a propellant gas.

The viscosity of the composition according to the present invention may decrease when the composition is heated and/or when a solvent is present in the composition. A lower viscosity may facilitate application by some of the methods mentioned above.

The temperature range wherein the composition according to the present invention may be applied to the substrate is very wide. The composition may generally be applied to the substrate at the prevailing ambient temperature (i.e. without additional heating or cooling), wherein ambient temperature means a temperature in the range of about 5° to about 30°C. However, if the ambient temperature is too low, for example when the composition is applied in the open air in winter, it may be necessary to heat the composition to a temperature that is higher than the prevailing ambient temperature, for example by heating the composition and/or the substrate to a practicable temperature.

Depending on the specific use and on the method of application, the composition may also be applied on the substrate at an elevated temperature by heating the substrate and/or the composition. For example, the composition is applied to the substrate at a temperature of about 25° to about 180°C, preferably of about 30°C to about 150°C, more preferably about 40° to about 120°C, and in particular about 50° to about 100°C.

In a preferred embodiment the substrate is part of a ship, such as for example part of a hold compartment or a ballast tank. In another preferred embodiment the substrate is part of a construction, such as for example an oil platform, a (hoisting) crane, a bridge, a (ski) lift, or a lamp post.

After evaporation of the solvent, the protective layer may be provided with a top coat. Many types of top coats adhere well to the protective layer. The top coat may be of a mechanical nature or of an optical nature. In one embodiment of the method according to the present invention the top coat comprises an optical top coat, preferably a coat of paint. In another embodiment the top coat comprises a mechanical protective layer.

The term "mechanical protective layer" denotes a top coat that protects the underlying layer or layers mechanically from external effects. Examples of mechanical protective layers include polymer (multilayer) films comprising e.g. polyethene, polypropene, polyvinyl chloride, polyesters, polyurethane or aramide. In addition, the polymer films may be laminated with reinforcing fibres, such as for example glass fibres or carbon fibres. In a preferred embodiment, the mechanical protective layer is a shrink sleeve.

If a mechanical protective layer is applied with stress to a substrate comprising a protective layer of the composition according to the invention, or if the mechanical protective layer shrinks around the substrate, e.g. a pipe, a self-repairing effect may be obtained whereby defects in the protective layer are repaired in course of time. The top coat then exerts continuous stress on the protective layer of the composition. If the top coat and/or the protective layer sustain a minor damage, this stress ensures a flow of the composition according to the invention towards the damaged site, resulting in the covering of any exposed surface of the underlying substrate. It should be noted that the composition according to the invention also exhibits this self-healing effect in the absence of a top coat, although self-healing then occurs more slowly. If the protective layer according to the invention is damaged, disbondment at the edges of the protective layer does not occur, and as a result, undercreep is minimised or even eliminated.

An "optical" top coat comprises for example a layer of paint or a combination of several layers of paint. The layer of paint must be compatible with the composition according to the present invention. An intermediate layer may be applied, if required, so that a barrier is formed between the composition and the paint layer. The intermediate layer may be formed by a single-component or by a multi-component system. Examples of a suitable paint are two-component epoxy paints, preferably solvent-free, waterborne acrylics and two-component polyurethanes.

The top coat may comprise more than one layer and/or more than one type of top coat. The top coat may for example comprise a combination of one or more mechanical top coats or a combination of one or more optical top coats. The top coat may also comprise a combination of one or more mechanical top coats with one or more optical top coats.

## Container

The invention also relates to a container comprising the composition according to the present invention and a propellant. Examples of a container include a can, a cartridge, a barrel and a drum. Propellants are known in the art, and include *inter alia* air, volatile organic solvents and hydrocarbons (optionally halogenated). Examples of propellants include propane, n-butane, *i*-butane, dimethyl ether, methyl ethyl ether, nitrous oxide, carbon dioxide, hydrofluoroalkanes such as for example 1,1,1,2,-tetrafluoroethane or 1,1,1,2,3,3,3-heptafluoropropane, or combinations thereof.

It may be advantageous to use techniques wherein the propellant is not in direct contact with the composition according to the invention, for example by containing said composition in a bag ("bag in can" or "bag on valve" techniques).

## Kit

The invention further relates to a kit comprising (i) the composition according to the present invention, and (ii) a paint composition.

## Examples

*Example 1*

A composition as shown in Table 1 was prepared. Said composition was applied to various substrates, including stainless steel, corroded steel, wood carbon steel, gypsum board, plywood, polymers and composites such as polyethene, polypropene, Glass fibre Reinforced Polyester. Various application methods were used, including paintbrush, paint roller, dipping. In addition, the composition was applied to a substrate by use of an aerosol can (propane as propellant) and by using spray paint equipment (Wagner Jaguar 75-150 airless spray equipment, fitted with Airless spray gun type G 15 and spray tip type 521).

*Table 1: Composition according to the invention.*

| Component | Amount (wt.%) |
|---|---|
| Oppanol B10 | 23.56 |
| Pigment PK4050 | 0.15 |
| Irganox 1010 | 0.12 |
| Irgafos 168 | 0.12 |
| Aerosil R972 | 1.83 |
| Omyalite T95 | 36.75 |
| Orange terpenes | 37.5 |

*Example 2*

The composition according to example 1 was applied to an outdoor, non-cleaned, heavily corroded carbon steel pipeline with. The compositions were applied with varying layer thickness. After evaporation of the solvent, the compositions were partially coated with a two-component epoxy decorative paint.

In order to investigate the protection against corrosion, the layers of the composition according to the invention were damaged by marking said layers with cross hatches. During the test period of several weeks, no corrosion and no spontaneous detachment of the layers were observed.

## Claims

**1.** A composition comprising:

(a) 5 wt.% to 30 wt.% of an amorphous polymer, said amorphous polymer having a glass transition temperature of lower than -20°C,
(b) 15 wt.% to 60 wt.% of a filler, and
(c) 10 wt.% to 80 wt.% of a solvent,

wherein the amorphous polymer is selected from the group consisting of:

(i) a polymer comprising 50.0 % to 98 % by weight of isobutene and 2 % to 50.0 % of a $C_2$ - $C_{12}$ alkene other than isobutene, a $C_4$ - $C_{12}$ alkadiene, or a mixture thereof, based on the total weight of the polymer;
(ii) a polymer comprising more than 98 % to 100 % by weight of isobutene, based on the total weight of the polymer; and
(iii) a mixture of (i) and (ii),

wherein the amounts of (a), (b) and (c) are calculated on the total weight of the composition, and wherein the solvent is a terpene having a boiling point of 130°C to 270°C.

2. The composition according to Claim 1, wherein the amorphous polymer has a number average molecular weight $M_n$ of 500 to 1,000,000.

3. The composition according to Claim 1 or Claim 2, wherein the amorphous polymer is a polyisobutene homopolymer.

4. The composition according to any one of the preceding claims, wherein the solvent is selected from the group of monoterpenes.

5. The composition according to any one of the precedings claims, wherein the solvent is selected from the group consisting of D-limonene, L-limonene, DL-limonene, and mixtures thereof.

6. The composition according to any one of the preceding claims, wherein the solvent is selected from the group of D-limonene, orange terpenes and orange oil.

7. The composition according to any one of the preceding claims comprising:

(a) 10 wt.% to 25 wt.% of an amorphous polymer, said amorphous polymer having a glass transition temperature of lower than -20°C,
(b) 20 wt.% to 60 wt.% of a filler, and
(c) 15 wt.% to 70 wt.% of a solvent,

wherein the amorphous polymer is selected from the group consisting of:

(i) a polymer comprising 50.0 % to 98 % by weight of isobutene and 2 % to 50.0 % of a $C_2$ - $C_{12}$ alkene other than isobutene, a $C_4$ - $C_{12}$ alkadiene, or a mixture thereof, based on the total weight of the polymer;
(ii) a polymer comprising more than 98 % to 100 % by weight of isobutene, based on the total weight of the polymer; and
(iii) a mixture of (i) and (ii),

wherein the amounts of (a), (b) and (c) are calculated on the total weight of the composition, and wherein the solvent is a terpene having a boiling point of 130°C to 270°C.

8. A process for the application of a protective layer to a substrate, the process comprising application of a layer of a composition to the surface of the substrate or a part thereof, said composition comprising:

(a) 5 wt.% to 30 wt.% of an amorphous polymer, said amorphous polymer having a glass transition temperature of lower than -20°C,
(b) 15 wt.% to 60 wt.% of a filler, and
(c) 10 wt.% to 80 wt.% of a solvent,

wherein the amorphous polymer is selected from the group consisting of:

(i) a polymer comprising 50.0 % to 98 % by weight of isobutene and 2 % to 50.0 % of a $C_2$ - $C_{12}$ alkene other than isobutene, a $C_4$ - $C_{12}$ alkadiene, or a mixture thereof, based on the total weight of the polymer;
(ii) a polymer comprising more than 98 % to 100 % by weight of isobutene, based on the total weight of the polymer; and
(iii) a mixture of (i) and (ii),

wherein the amounts of (a), (b) and (c) are calculated on the total weight of the composition, and wherein the solvent is a terpene having a boiling point of 130°C to 270°C.

9. A process according to Claim 8, the process comprising application of a layer of a composition to the surface of the substrate or a part thereof, said composition comprising:

(a) 10 wt.% to 25 wt.% of an amorphous polymer, said amorphous polymer having a glass transition temperature of lower than -20°C,
(b) 20 wt.% to 60 wt.% of a filler, and
(c) 15 wt.% to 70 wt.% of a solvent,

wherein the amorphous polymer is selected from the group consisting of:

(i) a polymer comprising 50.0 % to 98 % by weight of isobutene and 2 % to 50.0 % of a $C_2$ - $C_{12}$ alkene other than isobutene, a $C_4$ - $C_{12}$ alkadiene, or a mixture thereof, based on the total weight of the polymer;
(ii) a polymer comprising more than 98 % to 100 % by weight of isobutene, based on the total weight of the polymer; and
(iii) a mixture of (i) and (ii),

wherein the amounts of (a), (b) and (c) are calculated on the total weight of the composition, and wherein the solvent is a terpene having a boiling point of 130°C to 270°C.

10. The process according to Claim 8 or Claim 9, wherein the amorphous polymer is a polyisobutene homopolymer.

11. The process according to any one of Claims 8 - 10, wherein the substrate is selected from the group consisting of metals, alloys, concrete, polyolefins, epoxy resins, polyurethanes, wood, and combination thereof.

12. The process according to any one of Claims 8 - 11, wherein a top coat is applied after the application of the protective layer to the substrate.

13. The process according to Claim 12, wherein the top coat comprises a mechanical protective layer.

14. A container comprising a composition according to any one of Claims 1 - 7 and a propellant.

15. The container according to Claim 14, wherein the propellant is selected from the group consisting of air, volatile organic solvents and, optionally halogenated, hydrocarbons.

**Patentansprüche**

1. Zusammensetzung, die umfasst:

a) 5 Gew.-% bis 30 Gew.-% amorphes Polymer, wobei das amorphe Polymer eine Glasübergangstemperatur unterhalb von -20°C besitzt,
b) 15 Gew.-% bis 60 Gew.-% Füllstoff, und
c) 10 Gew.-% bis 80 Gew.% Lösungsmittel,

wobei das amorphe Polymer ausgewählt ist aus der Gruppe bestehend aus:

(i) Polymer, das 50.0 Gew.-% bis 98 Gew.-% Isobuten und 2 % bis 50.0 % von Isobuten verschiedenes $C_2$-$C_{12}$ Alken, $C_4$-$C_{12}$ Alkandien, oder eine Mischung davon umfasst, bezogen auf das Gesamtgewicht des Polymers,
(ii) Polymer, das mehr als 98 Gew.-% bis 100 Gew.-% Isobuten umfasst, bezogen auf das Gesamtgewicht des Polymers, und
(iii) einer Mischung von (i) und (ii),

wobei die Mengen von (a), (b) und (c) bezogen auf das Gesamtgewicht der Zusammensetzung berechnet sind, und wobei das Lösungsmittel ein Terpen mit einem Siedepunkt von 130°C bis 270°C ist.

2. Zusammensetzung nach Anspruch 1, wobei das amorphe Polymer ein durchschnittliches Molekulargewicht (Zahlenmittel, $M_n$) von 500 bis 1000000 besitzt.

3. Zusammensetzung nach Anspruch 1 oder Anspruch 2, wobei das amorphe Polymer ein Polyisobuten-Homopolymer ist.

4. Zusammensetzung nach einem der vorgehergehenden Ansprüche, wobei das Lösungsmittel ausgewählt ist aus der Gruppe von Monoterpenen.

5. Zusammensetzung nach einem der vorhergehenden Ansprüche, wobei das Lösungsmittel ausgewählt ist aus der Gruppe bestehend aus D-Limonen, L-Limonen, DL-Limonen und Mischungen davon.

6. Zusammensetzung nach einem der vorhergehenden Ansprüche, wobei das Lösungsmittel ausgewählt ist aus der Gruppe D-Limonen, Orangenterpenen und Orangenöl.

7. Zusammensetzung nach einem der vorhergehenden Ansprüche, die umfasst:

a) 10 Gew.-% bis 25 Gew.-% amorphes Polymer, wobei das amorphe Polymer eine Glasübergangstemperatur unterhalb von -20°C besitzt,
b) 20 Gew.-% bis 60 Gew.-% Füllstoff, und
c) 15 Gew.-% bis 70 Gew.-% Lösungsmittel,

wobei das amorphe Polymer ausgewählt ist aus der Gruppe bestehend aus:

(i) Polymer, das 50.0 Gew.-% bis 98 % Isobuten und 2 % bis 50.0 % von Isobuten verschiedenes $C_2$-$C_{12}$ Alken, $C_4$-$C_{12}$ Alkandien, oder eine Mischung davon umfasst, bezogen auf das Gesamtgewicht des Polymers,
(ii) Polymer, das mehr als 98 Gew.-% bis 100 Gew.-% Isobuten umfasst, bezogen auf das Gesamtgewicht des Polymers, und
(iii) einer Mischung von (i) und (ii),

wobei die Mengen von (a), (b) und (c) bezogen auf das Gesamtgewicht der Zusammensetzung berechnet sind und wobei das Lösungsmittel ein Terpen mit einem Siedepunkt von 130°C bis 270°C ist.

8. Verfahren zum Aufbringen einer Schutzschicht auf ein Substrat, wobei das Verfahren das Aufbringen einer Schicht einer Zusammensetzung auf die Oberfläche des Substrats oder eines Teils davon einschließt, wobei die Zusammensetzung umfasst:

a) 5 Gew.-% bis 30 Gew.-% amorphes Polymer, wobei das amorphe Polymer eine Glasübergangstemperatur unterhalb von -20°C besitzt,
b) 15 Gew.-% bis 60 Gew.-% Füllstoff, und
c) 10 Gew.-% bis 80 Gew.-% Lösungsmittel,

wobei das amorphe Polymer ausgewählt ist aus der Gruppe bestehend aus:

(i) Polymer, das 50.0 Gew.-% bis 98 % Isobuten und 2 % bis 50.0 % von Isobuten verschiedenes $C_2$-$C_{12}$ Alken, $C_4$-$C_{12}$ Alkandien, oder eine Mischung davon umfasst, bezogen auf das Gesamtgewicht des Polymers,
(ii) Polymer, das mehr als 98 Gew.-% bis 100 Gew.-% Isobuten umfasst, bezogen auf das Gesamtgewicht des Polymers, und
(iii) einer Mischung von (i) und (ii),

wobei die Mengen von (a), (b) und (c) bezogen auf das Gesamtgewicht der Zusammensetzung berechnet sind und wobei das Lösungsmittel ein Terpen mit einem Siedepunkt von 130°C bis 270°C ist.

9. Verfahren nach Anspruch 8, wobei das Verfahren das Aufbringen einer Schicht einer Zusammensetzung auf eine Oberfläche des Substrats oder eines Teils davon umfasst, wobei die Zusammensetzung umfasst:

a) 10 Gew.-% bis 25 Gew.-% amorphes Polymer, wobei das amorphe Polymer eine Glasübergangstemperatur unterhalb von -20°C besitzt,
b) 20 Gew.-% bis 60 Gew.-% Füllstoff, und
c) 15 Gew.-% bis 70 Gew.-% Lösungsmittel,

wobei das amorphe Polymer ausgewählt ist aus der Gruppe bestehend aus:

(i) Polymer, das 50.0 Gew.-% bis 98 % Isobuten und 2 % bis 50.0 % von Isobuten verschiedenes $C_2$-$C_{12}$ Alken, $C_4$-$C_{12}$ Alkandien oder eine Mischung davon umfasst, bezogen auf das Gesamtgewicht des Polymers,
(ii) Polymer, das mehr als 98 Gew.-% bis 100 Gew.-% Isobuten umfasst, bezogen auf das Gesamtgewicht des Polymers, und
(iii) einer Mischung von (i) und (ii),

wobei die Mengen von (a), (b) und (c) bezogen auf das Gesamtgewicht der Zusammensetzung berechnet sind und wobei das Lösungsmittel ein Terpen mit einem Siedepunkt von 130°C bis 270°C ist.

10. Verfahren nach Anspruch 8 oder Anspruch 9, wobei das amorphe Polymer ein Polyisobuten-Homopolymer ist.

11. Verfahren nach einem der Ansprüche 8 bis 10, bei dem das Substrat ausgewählt ist aus der Gruppe bestehend aus Metallen, Legierungen, Beton, Polyolefinen, Epoxidharzen, Poly-urethanen, Holz und Kombinationen davon.

12. Verfahren nach einem der Ansprüche 8 bis 11, bei dem nach Aufbringen der Schutzschicht auf das Substrat eine Deckschicht aufgebracht wird.

13. Verfahren nach Anspruch 12, bei dem die Deckschicht eine mechanische Schutzschicht umfasst.

14. Behälter, der eine Zusammensetzung gemäß einem der Ansprüche 1 bis 7 und ein Treibmittel umfasst.

15. Behälter nach Anspruch 14, bei dem das Treibmittel ausgewählt ist aus der Gruppe bestehend aus Luft, flüchtigen organischen Lösungsmitteln und, gegebenenfalls halogenierten, Kohlenwasserstoffen.

**Revendications**

1. Composition comprenant:

(a) de 5 % à 30 % en poids d'un polymère amorphe, ledit polymère amorphe présentant une température de transition vitreuse inférieure à -20°C,
(b) de 15 % à 60 % en poids d'une charge, et
(c) de 10 % à 80 % en poids d'un solvant,

dans laquelle le polymère amorphe est choisi dans le groupe constitué de:

(i) un polymère comprenant de 50.0 % à 98 % en poids d'isobutène et de 2 % à 50.0 % d'un alcène $C_2$-$C_{12}$ autre que l'isobutène, d'un alcadiène $C_4$-$C_{12}$, ou d'un mélange de ceux-ci, par rapport au poids total du polymère,
(ii) un polymère comprenant de plus de 98 % à 100 % en poids d'isobutène, par rapport au poids total du polymère, et
(iii) un mélange de (i) et (ii),

dans laquelle les quantités de (a), (b) et (c) sont calculées par rapport au poids total de la composition, et dans laquelle le solvant est un terpène présentant un point d'ébullition de 130°C à 270°C.

2. Composition selon la revendication 1, dans laquelle le polymère amorphe présente une masse molaire moyenne en nombre $M_n$ de 500 à 1000000.

**3.** Composition selon la revendication 1 ou la revendication 2, dans laquelle le polymère amorphe est un homopolymère de polyisobutène.

**4.** Composition selon l'une quelconque des revendications précédentes, dans laquelle le solvant est choisi dans le groupe des monoterpènes.

**5.** Composition selon l'une quelconque des revendications précédentes, dans laquelle le solvant est choisi dans le groupe constitué du D-limonène, du L-limonène, du DL-limonène et de leurs mélanges.

**6.** Composition selon l'une quelconque des revendications précédentes, dans laquelle le solvant est choisi dans le groupe du D-limonène, des terpènes d'orange et de l'huile d'orange.

**7.** Composition selon l'une quelconque des revendications précédentes, comprenant:

(a) de 10 % à 25 % en poids d'un polymère amorphe, ledit polymère amorphe présentant une température de transition vitreuse inférieure à -20°C,
(b) de 20 % à 60 % en poids d'une charge, et
(c) de 15 % à 70 % en poids d'un solvant,

dans laquelle le polymère amorphe est choisi dans le groupe constitué de:

(i) un polymère comprenant de 50.0 % à 98 % en poids d'isobutène et de 2 % à 50.0 % d'un alcène $C_2$-$C_{12}$ autre que l'isobutène, d'un alcadiène $C_4$-$C_{12}$, ou d'un mélange de ceux-ci, par rapport au poids total du polymère,
(ii) un polymère comprenant de plus de 98 % à 100 % en poids d'isobutène, par rapport au poids total du polymère, et
(iii) un mélange de (i) et (ii),

dans laquelle les quantités de (a), (b) et (c) sont calculées par rapport au poids total de la composition et dans laquelle le solvant est un terpène présentant un point d'ébullition de 130°C à 270°C.

**8.** Procédé d'application d'une couche protectrice sur un substrat, ce procédé comprenant l'application d'une couche d'une composition à la surface du substrat ou d'une partie de celui-ci, ladite composition comprenant:

(a) de 5 % à 30 % en poids d'un polymère amorphe, ledit polymère amorphe présentant une température de transition vitreuse inférieure à -20°C,
(b) de 15 % à 60 % en poids d'une charge, et
(c) de 10 % à 80 % en poids d'un solvant,

dans lequel le polymère amorphe est choisi dans le groupe constitué de:

(i) un polymère comprenant de 50.0 % à 98 % en poids d'isobutène et de 2 % à 50.0 % d'un alcène $C_2$-$C_{12}$ autre que l'isobutène, d'un alcadiène $C_4$-$C_{12}$, ou d'un mélange de ceux-ci, par rapport au poids total du polymère,
(ii) un polymère comprenant de plus de 98 % à 100 % en poids d'isobutène, par rapport au poids total du polymère, et
(iii) un mélange de (i) et (ii),

dans lequel les quantités de (a), (b) et (c) sont calculées par rapport au poids total de la composition et dans lequel le solvant est un terpène présentant un point d'ébullition de 130°C à 270°C.

**9.** Procédé selon la revendication 8, ce procédé comprenant l'application d'une couche d'une composition à la surface du substrat ou d'une partie de celui-ci, ladite composition comprenant:

(a) de 10 % à 25 % en poids d'un polymère amorphe, ledit polymère amorphe présentant une température de transition vitreuse inférieure à -20°C,
(b) de 20 % à 60 % en poids d'une charge, et
(c) de 15 % à 70 % en poids d'un solvant,

dans lequel le polymère amorphe est choisi dans le groupe constitué de:

(i) un polymère comprenant de 50.0 % à 98 % en poids d'isobutène et de 2 % à 50.0 % d'un alcène $C_2$-$C_{12}$ autre que l'isobutène, d'un alcadiène $C_4$-$C_{12}$, ou d'un mélange de ceux-ci, par rapport au poids total du polymère,
(ii) un polymère comprenant de plus de 98 % à 100 % en poids d'isobutène, par rapport au poids total du polymère, et
(iii) un mélange de (i) et (ii),

dans lequel les quantités de (a), (b) et (c) sont calculées par rapport au poids total de la composition et dans lequel le solvant est un terpène présentant un point d'ébullition de 130°C à 270°C.

**10.** Procédé selon la revendication 8 ou la revendication 9, dans lequel le polymère amorphe est un homopolymère de polyisobutène.

**11.** Procédé selon l'une quelconque des revendications 8 à 10, dans lequel le substrat est choisi dans le groupe constitué des métaux, des alliages, du béton, des polyoléfines, des résines époxy, des polyuréthanes, du bois, et de leur combinaison.

**12.** Procédé selon l'une quelconque des revendications 8 à 11, dans lequel une couche de finition est appliquée après l'application de la couche protectrice sur le substrat.

**13.** Procédé selon la revendication 12, dans lequel la couche de finition comprend une couche de protection mécanique.

**14.** Conteneur contenant une composition selon l'une quelconque des revendications 1 à 7 et un agent propulseur.

**15.** Conteneur selon la revendication 14, dans lequel l'agent propulseur est choisi dans le groupe constitué de l'air, des solvants organiques volatils, et des hydrocarbures, éventuellement halogénés.

# EP 2 794 743 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 61235470 B
- JP 61254264 B
- JP 61019671 B
- US 4282126 A
- WO 9821765 A
- EP 300638 A2
- WO 2005005528 A

### Non-patent literature cited in the description

- **N. WARREN.** Metal Corrosion in Boats. Sheridan House Inc, 2006
- **ULLMANNS.** Encyklopädie der technischen Chemie. 1980, vol. 19, 216-223
- ENCYKLOPÄDIE DER TECHNISCHEN CHEMIE. 1977, vol. 13, 621-623
- **S. WU.** *J. Colloid. Interface. Sci.,* 1969, vol. 31, 153
- **D.G. LEGRAND ; G.L. GAINES, JR.** *J. Colloid. Interface Sci.,* 1969, vol. 31, 162
- **KIRK-OTHMER.** Encyclopedia of Chemical Technology. 1993, vol. 8, 905-1093
- ENCYCLOPEDIA OF CHEMICAL TECHNOLOGY. 1994, vol. 9, 1-37
- Polymer Handbook. 1989
- **J. BOURDARIAT ; R. ISNARD ; J. ODIN.** *J. Polym. Sci.,* 1973, vol. 11, 1817-1828
- **R.W. WARFIELD ; R. BROWN.** *J. Polym. Sci.,* 1967, vol. 5, 791
- **GAUR, B. ; WUNDERLICH, J.** *Phys. Chem. Ref. Data,* 1981, vol. 10, 1052-1063
- *The Polymer Handbook,* 1989
- **KIRK-OTHMER.** Enclopedia of Chemical Technology. 1996, vol. 17, 621
- **KIRK-OTHMER.** Enclopedia of Chemical Technology. 1996, vol. 17, 622
- **KIRK-OTHMER.** Enclopedia of Chemical Technology. 1996, vol. 17, 639
- **F. STRICKER ; M. HORTON.** New Stabilizer Solutions for Polyolefin Film Grades. *European Tappi PLACE Conference,* 12 May 2003